# EUROPEAN PATENT APPLICATION

(11) **EP 3 228 938 A1**
(43) Date of publication of application: **11.10.2017**
(21) Application number: 17162138.6
(22) Date of filing: 21.03.2017
(51) Int. Cl.: F23R 3/28, F23R 3/36, F23N 5/10, F23R 3/34, F23N 5/24

(54) **GAS TURBINE COMBUSTOR**

(30) Priority: 05.04.2016 JP 2016075875
(71) Applicant: Mitsubishi Hitachi Power Systems, Ltd., Nishi-ku Yokohama 220-8401 (JP)
(72) Inventor: Hayashi, Akinori, Yokohama 220-8401 (JP); Asai, Tomohiro, Yokohama 220-8401 (JP); Akiyama, Yasuhiro, Yokohama 220-8401 (JP)
(74) Representative: Strehl Schübel-Hopf & Partner

(57) **Abstract**

In a gas turbine combustor (3) of the present invention, an air hole plate 20 includes a center air hole group 51 configured from a plurality of air holes (51A) and (51 B) and a plurality of outer circumferential air hole groups (52) configured from a plurality of air holes (52A, 52B), and (52C) and formed to surround the center air hole group (51). The gas turbine combustor (3) includes a hole part (601) and a temperature sensor (401) provided on the air hole plate (20) to be located in a region surrounded by two outer circumferential air hole groups (52) adjacent to each other and the center air hole group (51), a supply source (220) of coolant, a cooling pipeline (205) that connects the hole part (601) and the supply source (220), valves (67, 68) provided in the cooling pipeline (205), and a control system (500) that drives the valves (67, 68) on the basis of a measured value of the temperature sensor (401).

## Description

### BACKGROUND OF THE INVENTION

### FIELD OF THE INVENTION

The present invention relates to a gas turbine combustor.

### DESCRIPTION OF THE RELATED ART

In recent years, from the viewpoint of prevention of global warming, effective use of natural resources, there are increasing tendencies of using, as fuel of a gas turbine combustor, gas containing hydrogen such as a coke oven gas by-produced in iron works and off-gas by-produced in oil refineries. The fuel of this type (hereinafter, hydrogen content fuel) has less emissions of carbon dioxide (CO₂), which causes the global warming, in combustion and is effective for prevention of the global warming. In an integrated coal gasification combined cycle plant (IGCC plant) that gasifies coal, which is an abundant resource, and generates power, a system (carbon capture & storage: CCS) that captures and stores carbon in hydrogen content fuel (coal-derived syngas) supplied to a gas turbine combustor is provided to further reduce the emission of CO₂.

Incidentally, the hydrogen in the hydrogen content fuel has a wide inflammable range and high burning velocity. Therefore, high-temperature flames are locally formed near a wall surface in a combustion chamber. It is likely that the reliability of the gas turbine combustor is spoiled. As a method of suppressing the high-temperature flames from being locally formed, there is a method of arranging a fuel jet and a combustion air flow passage on the same axis and supplying a fuel flow as a coaxial jet wrapped by an air flow to the combustion chamber (see JP-A-2003-148734, etc.).

### SUMMARY OF THE INVENTION

In general, in the IGCC plant, the coal-derived syngas is generated using steam generated by waste heat of a gas turbine. Therefore, the gas turbine is started up by startup fuel (e.g., oil fuel) other than the coal-derived syngas. Under a part load condition in which the coal-derived syngas is usable, the startup fuel is switched to the coal-derived syngas. The gas turbine is operated up to a base load condition while controlling the number of burners to be burned. In general, when the hydrogen content fuel is used, when ignition fails, the hydrogen content fuel is emitted without being burned. It is likely that explosion occurs because of, in particular, the hydrogen in the hydrogen content fuel in the gas turbine on the downstream side. Therefore, as explained above, the operating method for starting up the gas turbine with the startup fuel is adopted to secure safety.

However, when the startup fuel is switched to the coal-derived syngas, flames generated by the respective fuels interfere with each other and the temperature of a structure of the gas turbine combustor excessively rises. It is likely that the reliability of the gas turbine combustor is deteriorated. In particular, since the compositions of the by-product gas and the coal-derived syngas variously change according to operating conditions of the plant, a way of rising of the temperature of the structure greatly changes. Therefore, it is desirable to cool the structure according to the operating conditions to suppress the excessive temperature rise and secure the reliability of the gas turbine combustor. JP-A-2003-148734 has room of improvement concerning this point.

The present invention has been devised in view of the above and an object of the present invention is to suppress an excessive temperature rise of a structure of a gas turbine combustor and secure the reliability of the gas turbine combustor.

In order to achieve the object, the one aspect of the present invention provides a gas turbine combustor including a plurality of fuel nozzles that inject fuel, an air hole plate including a plurality of air holes formed to correspond to the plurality of fuel nozzles, the air hole plate being provided on a downstream side in a flowing direction of the fuel of the plurality of fuel nozzles, and a combustion chamber that causes the fuel and an air injected from the plurality of air holes to burn to generate combustion gas, the air hole plate including a center air hole group configured from the plurality of air holes and a plurality of outer circumferential air hole groups configured from the plurality of air holes and formed to surround the center air hole group, the gas turbine combustor including: a hole part and a temperature sensor provided on the air hole plate to be located in a region surrounded by a pair of the outer circumferential air hole groups adjacent to each other and the center air hole group; a supply source of coolant; a cooling pipeline that connects the hole part and the supply source; a valve provided in the cooling pipeline; and a control system that drives the valve on the basis of a measured value of the temperature sensor.

According to the present invention, it is possible to suppress an excessive temperature rise of a structure of a gas turbine combustor and secure the reliability of the gas turbine combustor.

### BRIEF DESCRIPTION OF THE DRAWINGS

Fig. 1 is a diagram representing a configuration example of a gas turbine plant applied with a combustor according to a first embodiment of the present invention;
Fig. 2 is a diagram of a burner part according to the first embodiment of the present invention viewed from a downstream side;
Fig. 3 is a schematic diagram showing a main part of a control system according to the first embodiment of the present invention;
Fig. 4 is a diagram showing a fuel staging in the combustor according to the first embodiment of the present invention;
Fig. 5 is a diagram showing a concept of flame formation in a fuel switching process;
Fig. 6 is a flowchart showing a supply procedure of coolant;
Fig. 7 is a diagram showing changes in a fuel flow rate and a metal temperature in a fuel switching process in a gas turbine plant according to a comparative example;
Fig. 8 is a diagram showing changes in a fuel flow rate and a metal temperature in the fuel switching process in the gas turbine plant according to the first embodiment of the present invention;
Fig. 9 is a diagram representing a configuration example of a gas turbine plant applied with a combustor according to a second embodiment of the present invention;
Fig. 10 is a diagram of a burner part according to the second embodiment of the present invention viewed from a downstream side;
Fig. 11 is a schematic configuration showing a main part of a control system according to the second embodiment of the present invention; and
Fig. 12 is a diagram showing changes in a fuel flow rate and a metal temperature in a fuel switching process in the gas turbine plant according to the second embodiment of the present invention.

### DESCRIPTION OF THE PREFERRED EMBODIMENTS

### First embodiment

### Configuration

### 1. Gas turbine plant

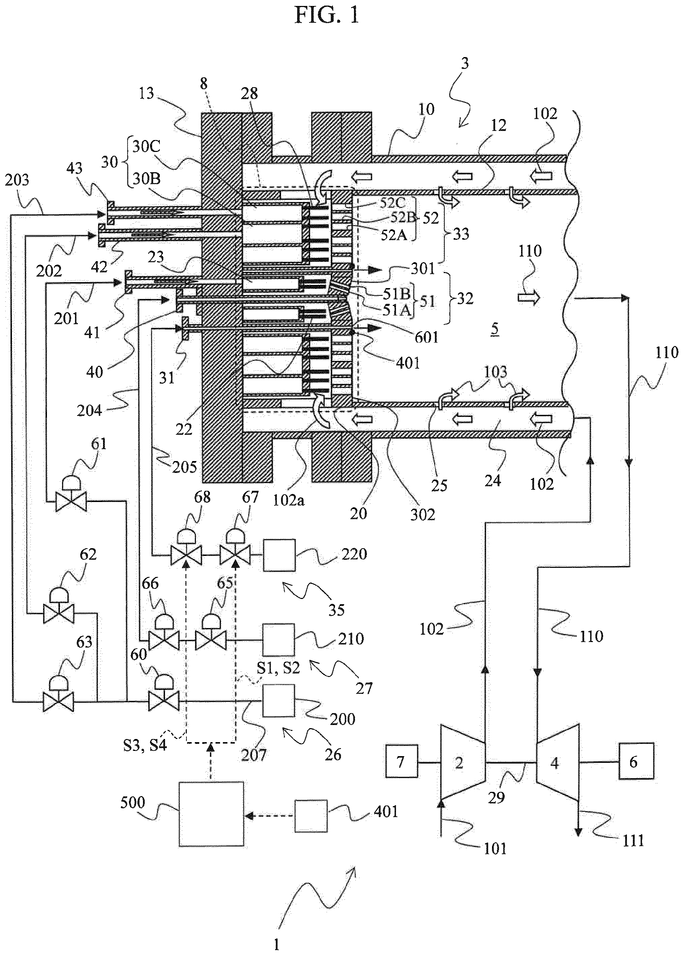

Fig. 1 is a diagram representing a configuration example of a gas turbine plant applied with a gas turbine combustor (hereinafter, combustor) according to this embodiment. As shown in Fig. 1, a gas turbine plant 1 includes a compressor (an air compressor) 2, a combustor 3, a turbine 4, a power generator 6, and a startup motor 7.

The compressor 2 is started up by the startup motor 7, compresses air 101 sucked from the atmosphere via an inlet (not shown in the figure) to generate high-pressure compressed air 102, and supplies the compressed air 102 to the combustor 3. The combustor 3 mixes the compressed air 102 supplied from the compressor 2 with fuel supplied from a fuel supplying system 26 (explained below) and burns the compressed air 102 and the fuel, generates high-temperature combustion gas 110, and supplies the combustion gas 110 to the turbine 4. The combustion gas 110 supplied from the combustor 3 expands, whereby the turbine 4 is driven. The combustion gas 110 that has driven the turbine 4 is discharged from the turbine 4 as exhaust gas 111. The power generator 6 rotates with a driving force obtained by the turbine 4 and generates power. In this embodiment, the compressor 2, the turbine 4, and the power generator 6 are coupled to one another by a shaft 29.

### 2. Combustor

The combustor 3 includes an outer casing 10, a combustion liner 12, an end cover 13, a burner part 8, a fuel supplying system 26, an oil fuel supplying system 27, and a cooling system 35.

The combustion liner 12 is provided on a downstream side in a flowing direction of the combustion gas 110 of the burner part 8. In the following explanation, "upstream" and "downstream" in the flowing direction of the combustion gas 110 are simply referred to as "upstream" and "downstream". The combustion liner 12 is formed in a cylindrical shape and partitions the compressed air 102 supplied from the compressor 2 and the combustion gas 110 generated by the combustor 3. The outer casing 10 is formed in a cylindrical shape and provided on the outer circumference side of the combustion liner 12 to cover the combustion liner 12. An annular space formed between the outer casing 10 and the combustion line 12 configures an annular channel 24 in which the compressed air 102 supplied from the compressor 2 to the combustor 3 flows. The compressed air 102 flowing in the annular channel 24 performs convection cooling of the combustion liner 12 from an outer wall surface side of the combustion liner 12. A large number of communication holes 25 are formed on a wall surface of the combustion liner 12. A part of the compressed air 102 flowing in the annular channel 24 flows into the inside of the combustion liner 12 from the annular channel 24 via the communication holes 25 as cooling air 103 and is used for film cooling of the combustion liner 12. The air not used for the film cooling of the combustion liner 12 in the compressed air 102 flowing in the annular channel 24 flows in the annular channel 24 toward the burner part 8 and flows into the burner part 8 as combustion air 102a. The combustion air 102a flowed into the burner part 8 is injected into a combustion chamber 5 together with the fuel supplied from the fuel supplying system 26 to the burner part 8 and is burned. The end cover (a combustor end cover) 13 is provided on the downstream side in the flowing direction of the compressed air 102 flowing in the annular channel 24 of the burner part 8 and closes one end (an end portion on the downstream side in the flowing direction of the compressed air 102 flowing in the annular channel 24) of the outer casing 10. The combustion chamber 5 is formed on the inner side of the combustion liner 12. In the combustion chamber 5, gas mixture of fuel injected from air hole groups 51 and 52 formed in an air hole plate 20 (explained below) of the burner part 8 and the combustion air 102a is burned and the combustion gas 110 is generated.

### 2-1. Burner part

The burner part 8 is disposed to be orthogonal to the center axis of the combustion liner 12 and entirely closes the end portion on the upstream side of the combustion liner 12. The burner part 8 includes an oil spray nozzle 40, pluralities of fuel nozzles 22 and 28, fuel dividers 23 and 30, and an air hole plate 20. In this embodiment, the burner part 8 is configured from one pilot burner 32 disposed coaxially with the combustion liner 12 on an upstream side of the combustion chamber 5 and a plurality of main burners 33 disposed around the pilot burner 32. Specifically, the oil spray nozzle 40, the plurality of fuel nozzles (fuel nozzles for pilot burner) 22, the fuel divider (a fuel divider of pilot burner) 23, and the air hole group 51 of the air hole plate 20 configure the pilot burner 32. The plurality of fuel nozzles (fuel nozzles for main burner) 28, the fuel divider (a fuel divider for main burner) 30, and the air hole group 52 of the air hole plate 20 configure the main burners 33. Each of the pilot burner 32 and the main burners 33 is concentrically divided into a plurality of (in this embodiment, three) annular rows. In the following explanation, the plurality of annular rows of the pilot burner 32 and the main burners 33 are respectively referred to as first row, second row, and third row as appropriate from the inner circumference side toward the outer circumference side.

The oil spray nozzle 40 is a nozzle that supplies startup fuel to the combustion chamber 5. The oil spray nozzle 40 is supported coaxially with the combustion liner 12 by the end cover 13. That is, the distal end portion of the oil spray nozzle 40 is located in the center of the air hole plate 20 (the first row of the pilot burner 32) when viewed from the combustion chamber 5. As the startup fuel, oil fuel such as gas oil, kerosene, or fuel oil A or gas fuel such as natural gas or propane can be used.

The plurality of fuel nozzles 22 are disposed concentrically in the second and third rows of the pilot burner 32 and provided (annularly disposed) over the entire circumferences of the rows. The plurality of fuel nozzles 22 are supported by the fuel divider 23. The fuel divider 23 is supported by the end cover 13. The distal end of the fuel nozzle 22 is formed in a cylindrical shape. The fuel nozzle 22 injects the fuel supplied from the fuel supplying system 26 toward the air hole group 51 of the air hole plate 20.

The plurality of fuel nozzles 28 are concentrically disposed in the first to third rows of the main burners 33 and provided (annularly disposed) over the entire circumferences of the rows. The fuel nozzles 28 disposed in the first row are supported by a fuel divider 30B. The fuel nozzles 28 disposed in the second and third rows are supported by a fuel divider 30C. The fuel dividers 30B and 30C are supported by the end cover 13. The distal end of the fuel nozzle 28 is formed in a cylindrical shape. The fuel nozzle 28 injects the fuel supplied from the fuel supplying system 26 toward the air hole group 52 of the air hole plate 20.

The air hole plate 20 includes the air hole groups 51 and 52. The air hole plate 20 is a disk-like plate coaxial with the combustion liner 12 and is disposed spaced apart from the distal ends of the pluralities of fuel nozzles 22 and 28 on the downstream side in the flowing direction of the fuel of the pluralities of fuel nozzles 22 and 28. That is, in this embodiment, the pluralities of fuel nozzles 22 and 28 are not inserted into the air hole groups 51 and 52. A center region of the air hole plate 20 (a region configuring the pilot burner 32) is recessed to the fuel nozzle 22 side (the upstream side in the flowing direction of the fuel). That is, a wall surface 301 on the combustion chamber 5 side and a wall surface on the fuel nozzle 22 side in the center region of the air hole plate 20 incline to the upstream side in the flowing direction of the fuel toward the center of the air hole plate 20 with respect to a wall surface 302 on the combustion chamber 5 side and a wall surface on the fuel nozzle 22 side in a region excluding the center region.

The air hole group (a center air hole group) 51 is formed in the center region of the air hole plate 20. The center air hole group 51 is configured from pluralities of air holes 51A and 51 B. In this embodiment, the pluralities of air holes 51A and 51 B are concentrically disposed in the second and third rows of the pilot burner 32 and provided over the entire circumferences of the air hole rows. In the pluralities of air holes 51A and 51 B, one air hole is disposed to correspond to one fuel nozzle 22 on the downstream side in the flow direction of the fuel of the fuel nozzle 22. The pluralities of air holes 51A and 51 B are formed in a right circular cylindrical shape in which two circles configuring an inlet (an opening section on the upstream side in the flowing direction of the fuel) and an outlet (an opening section on the downstream side in the flowing direction of the fuel) and the center axis are orthogonal to each other. On the other hand, since the center region of the air hole plate 20 is recessed to the fuel nozzle 22 side as explained above, the center axes of the pluralities of air holes 51A and 51 B incline to the radial direction inner side of the air hole plate 20 with respect to the axes of the fuel nozzles 22 corresponding to the pluralities of air holes 51 A and 51 B.

The air hole group (an outer circumferential air hole group) 52 is formed to surround the center air hole group 51 on the outer circumference side of the center air hole group 51 of the air hole plate 20. The outer circumferential air hole group 52 is configured from pluralities of air holes 52A, 52B, and 52C. The pluralities of air holes 52A to 52C are concentrically disposed in the first to third rows of the main burners 33 and provided over the entire circumferences of the air hole rows. In the pluralities of air holes 52A to 52C, one air hole is disposed to correspond to one fuel nozzle 28 on the downstream side in the flowing direction of the fuel of the fuel nozzle 28. The pluralities of air holes 52A to 52C are formed in a right circular cylindrical shape in which two circles configuring an inlet and an outlet and the center axis are orthogonal to each other. The pluralities of air holes 52A to 52C are disposed coaxially with the fuel nozzles 28 corresponding to the pluralities of air holes 52A to 52C.

### 2-2. Fuel supplying system

The fuel supplying system 26 includes a fuel supply source 200, a common fuel pipeline 207, first to third fuel pipelines 201 to 203, and first to third fuel supply nozzles 41 to 43. The fuel supply source 200 is a supply source of fuel supplied to the first to third fuel supply nozzles 41 to 43. The common fuel pipeline 207 is connected to the fuel supply source 200. A fuel shut-off valve (a switch valve) 60 is provided in the common fuel pipeline 207. The first to third fuel pipelines 201 to 203 branch from the common fuel pipeline 207 in parallel and are connected to the first to third fuel supply nozzles 41 to 43. First to third fuel flow control valves 61 to 63 are provided in the first to third fuel pipelines 201 to 203. The first to third fuel supply nozzles 41 to 43 are connected to the fuel dividers 23, 30B, and 30C. Note that the number of fuel pipelines branching from the common fuel pipeline 207 is not limited to three.

The fuel guided from the fuel supply source 200 to the first to third fuel supply nozzles 41 to 43 through the first to third fuel pipelines 201 to 203 is supplied to the fuel dividers 23, 30B, and 30C. The fuel (F1 fuel) supplied to the fuel divider 23 through the first fuel supply nozzle 41 is injected from the distal end of the fuel nozzle 22 and supplied to the fuel chamber 5. The fuel (F2 and F3 fuels) supplied to the fuel dividers 30B and 30C through the second and third fuel supply nozzles 42 and 43 is injected from the distal end of the fuel nozzle 28 and supplied to the fuel chamber 5. A flow rate of the F1 fuel is adjusted by the first fuel flow control valve 61, a flow rate of the F2 fuel is adjusted by the second fuel flow control valve 62, and a flow rate of the F3 fuel is adjusted by the third fuel flow control valve 63. In this embodiment, a power generation amount of the gas turbine plant 1 is adjusted by individually adjusting the flow rates of the F1 to F3 fuels with the first to third fuel flow control valves 61 to 63. Note that, as the F1 to F3 fuels, gas fuel containing hydrogen or carbon monoxide such as coke oven gas, off-gas by-produced in oil refineries, or coal-derived syngas, natural gas, or the like can be used.

### 2-3. Oil fuel supplying system

The oil fuel supplying system 27 includes an oil fuel supply source 210 and an oil fuel pipeline 204. The oil fuel supply source 210 is a supply source of oil fuel supplied to the oil spray nozzle 40. The oil fuel pipeline 204 connects the oil fuel supply source 210 and the oil spray nozzle 40. An oil fuel shut-off valve (switch valve) 65 and an oil fuel flow control valve 66 are provided in the oil fuel pipeline 204. The oil fuel guided from the oil fuel supply source 210 to the oil spray nozzle 40 through the oil fuel pipeline 204 is injected from the distal end of the oil spray nozzle 40 and supplied to the combustion chamber 5. A flow rate of the oil fuel supplied to the oil spray nozzle 40 is adjusted by the oil fuel flow control valve 66.

### 2-4. Cooling system

The cooling system 35 includes a coolant supply source 220, a cooling pipeline 205, a cooling nozzle 31, a thermocouple 401, a cooling hole 601, and a control system 500. The coolant supply source 220 is a supply source of coolant supplied to the cooling hole 601. The cooling pipeline 205 connects the coolant supply source 220 and the cooling nozzle 31. The cooling nozzle 31 is connected to the cooling hole 601. The coolant guided from the coolant supply source 220 to the cooling nozzle 31 through the cooling pipeline 205 is injected into the combustion chamber 5 via the cooling hole 601. In the cooling pipeline 205, a coolant shut-off valve (switch valve) 67 and a coolant flow control valve 68 are provided. In this embodiment, the coolant shut-off valve 67 and the coolant flow control valve 68 are electrically connected to the control system 500. The coolant shut-off valve 67 receives an input of signals S1 and S2 from the control system 500 and switches opening and shut-off of the cooling pipeline 205. Specifically, the coolant shut-off valve 67 opens the cooling pipeline 205 when receiving an input of the signal (an opening signal) S1 from the control system 500 and shuts off the cooling pipeline 205 when receiving an input of the signal (a shut-off signal) S2 from the control system 500. Valve opening of the coolant flow control valve 68 is adjusted according to signals S3 and S4 from the control system 500. Specifically, the coolant flow control valve 68 is adjusted to opening corresponding to the signal (an opening command signal) S3 when receiving an input of the signal S3 from the control system 500 and adjusted to opening of zero (i.e., the coolant flow control valve 68 closes) when receiving an input of the signal (a closing command signal) S4 from the control system 500. By adjusting the opening of the coolant flow control valve 68, the flow rate of the coolant supplied from the coolant supply source 220 to the cooling hole 601 is adjusted.

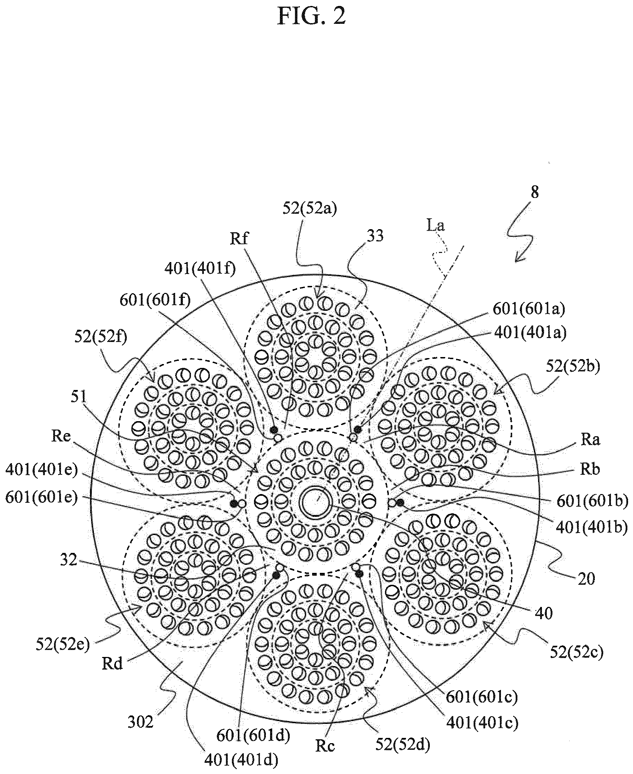

Fig. 2 is a diagram of the burner part according to this embodiment viewed from the downstream side. As shown in Fig. 2, in this embodiment, six outer circumferential air hole groups 52 are formed around the center air hole group 51. In the following explanation, the outer circumferential air hole groups 52 are referred to as outer circumferential air hole groups 52a to 52f clockwise from the outer circumferential air hole group 52 shown on the upper side of the center air hole group 51.

The thermocouple (a temperature sensor) 401 and the cooling hole (a hole part) 601 are provided on the air hole plate 20 to be located in a region surrounded by two outer circumferential air hole groups 52 adjacent to each other and the center air hole group 51. As shown in Fig. 2, in this embodiment, one thermocouple 401 (401 a to 401f) and one cooling hole 601 (601 a to 601 f) are provided in each of regions Ra to Rf surrounded by two outer circumferential air hole groups 52a and 52b, 52b and 52c, 52c and 52d, 52d and 52e, 52e and 52f, and 52f and 52a adjacent to each other and the center air hole group 51 of the air hole plate 20. In the following explanation, the thermocouple 401 a and the cooling hole 601 a are explained. However, the same applies to the thermocouples 401 b to 401f and the cooling holes 601 b to 601 f.

The cooling hole 601 a is formed on a straight line La extending from the center of the air hole plate 20 and passing between two outer circumferential air hole groups 52a and 52b adjacent to each other. The cooling hole 601 a is formed in a right circular cylindrical shape in which two circles configuring an opening section on the upstream side and an opening section on the downstream side in the flowing direction of the coolant and the center axis are orthogonal to each other and is disposed coaxially with the cooling nozzle 31 (see Fig. 1). As the coolant supplied to the cooling hole 601 a, nitrogen generated by an air separation unit (not shown in the figure), steam, water, and the like can be used. Note that the cooling hole 601a is not limited to the configuration in which the cooling hole 601 a is disposed coaxially with the cooling nozzle 31. For example, the cooling hole 601 a may be disposed to incline with respect to the axis of the cooling nozzle 31.

The thermocouple 401 a measures a metal temperature Tm in a region Ra of the air hole plate 20. The thermocouple 401 a is provided on a straight line La to be adjacent to the cooling hole 601 a. Note that, in this specification, "adjacent" refers to a state in which the thermocouple 401 a is provided apart from the cooling hole 601 a by a minimum distance at which the thermocouple 401 a is not affected by the coolant flowing in the cooling hole 601 a. The thermocouple 401 a is inserted into and provided in a hole part for thermocouple (not shown in the figure) formed from the wall surface 302 on the combustion chamber 5 side of the air hole plate 20 toward the upstream side in the flowing direction of the fuel.

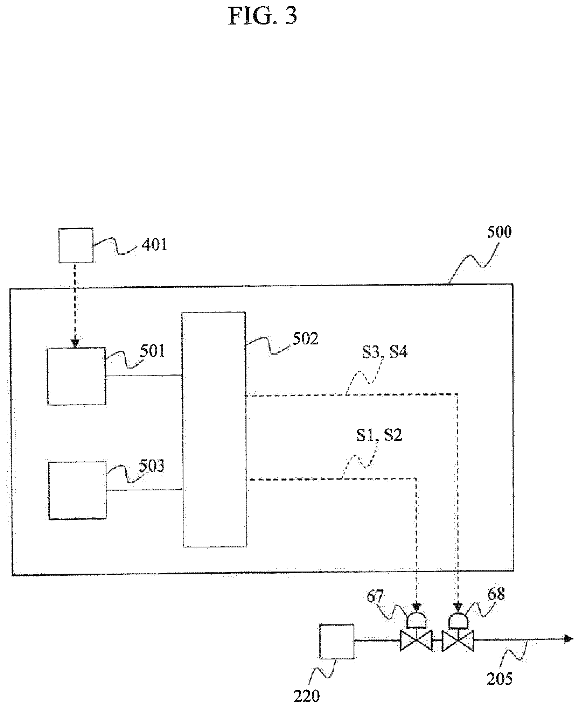

Fig. 3 is a schematic diagram showing a main part of the control system according to this embodiment. The control system 500 drives the coolant shut-off valve 67 and the coolant flow control valve 68 on the basis of the metal temperature Tm measured by the thermocouple 401. As shown in Fig. 3, the control system 500 includes a temperature comparator 501, a coolant flow calculation part 502, and a memory part 503.

The temperature comparator 501 is electrically connected to the thermocouple 401. The temperature comparator 501 compares a maximum among the metal temperatures Tm in regions Ra to Rf of the air hole plate 20 measured by the thermocouple 401 and an upper limit value (setting value) Tmax. The upper limit value Tmax is a maximum temperature at which a structure (e.g., the air hole plate 20) of the combustor 3 can maintain structural strength. The temperature comparator 501 is electrically connected to the coolant flow calculation part 502. When the metal temperature Tm is larger than the upper limit value Tmax, the temperature comparator 501 outputs a signal (a metal signal) concerning the metal temperature Tm to the coolant flow calculation part 502. On the other hand, the temperature comparator 501 compares a minimum among the metal temperatures Tm in the regions Ra to Rf of the air hole plate 20 measured by the thermocouple 401 and a lower limit value (setting value) Tmin. The lower limit value Tmin is a minimum temperature at which a flame temperature in the combustion chamber 5 does not drop because of the coolant and flame does not become unstable. When the metal temperature Tm is smaller than the lower limit value Tmin, the temperature comparator 501 outputs a signal (a stop signal) to the coolant flow calculation part 502.

The coolant flow calculation part (a calculation part) 502 is electrically connected to the memory part 503. When receiving an input of the metal signal output from the temperature comparator 501, the calculation part 502 acquires (calculates), on the basis of the metal temperature Tm, opening of the coolant flow control valve 68 from a table indicating a relation between the metal temperature Tm and the opening of the coolant flow control valve 68 stored in the memory part 503. The calculation part 502 outputs the signal S1 to the coolant shut-off valve 67 to open the cooling pipeline 205, outputs the signal S3 to the coolant flow control valve 68 to adjust the opening of the coolant flow control valve 68 to the acquired opening, and supplies the coolant to the combustion chamber 5 via the cooling hole 601. On the other hand, when receiving an input of the stop signal from the temperature comparator 501, the calculation part 502 outputs the signal S2 to the coolant shut-off valve 67 to shut off the cooling pipeline 205 and outputs the signal S4 to the coolant flow control valve 68 to adjust the opening of the coolant flow control valve 68 to zero.

### Operation

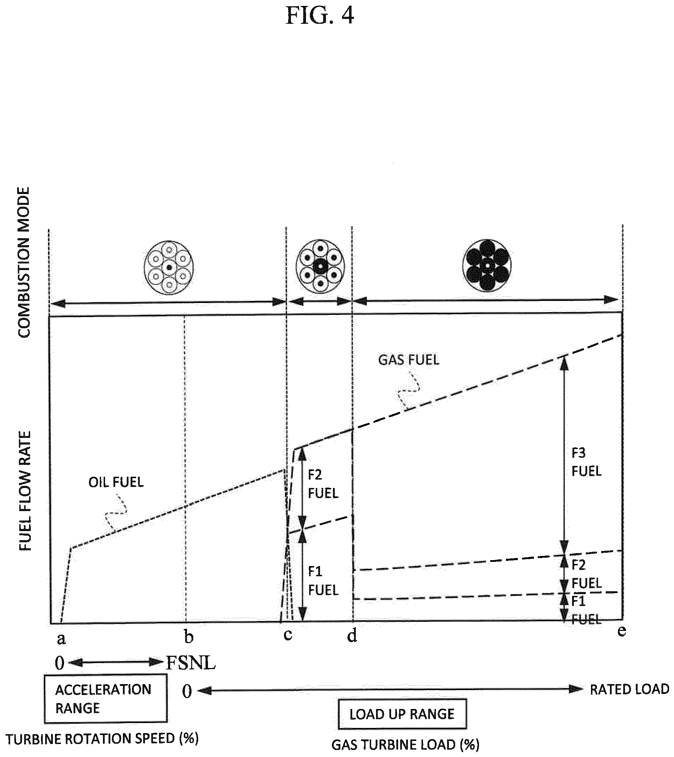

Fig. 4 is a diagram showing fuel staging in the combustor according to this embodiment. Fig. 4 shows a flow rate change of fuels (the oil fuel and the F1 to F3 fuels) from the time when the gas turbine starts startup until the time when the gas turbine reaches a rated rotation speed and rated load state (full speed full load (FSFL)). In Fig. 4, the horizontal axis indicates an elapsed time and the vertical axis indicates a fuel flow rate. In the top part of Fig. 4, combustion modes of the burner part 8 from the time when the gas turbine starts up until the time when the gas turbine reaches the FSFL are shown. Portions where the fuels are injected are indicated by black.

In the following explanation, a process from the time when the gas turbine starts the startup until the time when the gas turbine reaches the FSFL is divided into five points in time (points in time "a" to "e") and a change in a fuel flow rate is explained. The point in time "a" is a point in time when the gas turbine starts the startup. The point in time "b" is a point in time when the gas turbine reaches a rated rotation speed and no load state (full speed no load (FSNL)). The point in time "c" is a point in time when the fuel is switched. The point in time "d" is a point in time when the burner part 8 is switched to a full combustion mode. The point in time "e" is a point in time when the gas turbine reaches the FSFL.

### *Points in time "a" to "b"

At the point in time "a", the compressor 2 is started up. When the turbine 4 is accelerated to reach rotation speed that satisfies an ignitability condition, the oil fuel is supplied from the oil fuel supply source 210 to the oil spray nozzle 40 and burned to ignite the combustor 3. A flow rate of the oil fuel is increased even after the turbine 4 reaches predetermined rotation speed. The turbine 4 is accelerated until the gas turbine reaches the FSNL. During this period, the F1 and F2 fuels are not supplied to the fuel nozzles 22 and 28. Note that a temporal section from the time when the gas turbine starts the startup until the time when the gas turbine starts to take a load is referred to as acceleration range.

### *Points in time "b" to "c"

At the point in time "b", when the gas turbine reaches the FSNL, the gas turbine starts to take a load from the power generator 6 and increases the load. The flow rate of the oil fuel supplied to the oil spray nozzle 40 is increased according to the increase in the load. The load is increased until the load reaches a specified part load condition for starting switching of the fuel.

### *Points in time "c" to "d"

At the point in time "c", when the load reaches the specified part load condition for starting the switching of the fuel, a flow rate of the F1 and F2 fuels is increased while the flow rate of the oil fuel is reduced. The switching of the fuel is started. The combustor 3 operates in a combustion mode (a partial combustion mode) in which the F1 and F2 fuels supplied from the fuel supply source 200 to the first and second fuel pipelines 201 and 202 are injected from the fuel nozzle 22 of the pilot burner 32 and the fuel nozzle 28 in the first row of the main burners 33.

### *Points in time "d" to "e"

At the point in time "d", when the load reaches the specified part load condition for switching the combustion mode, the combustor 3 operates in a combustion mode (a full combustion mode) in which the F1 to F3 fuels supplied from the fuel supply source 200 to the first to third fuel pipelines 201 to 203 are injected from the fuel nozzle 22 of the pilot burner 32 and the fuel nozzles 28 in the first to third rows of the main burners 33. Thereafter, a flow rate of the F1 to F3 fuels is increased. The gas turbine reaches the FSFL. Note that a temporal section from the time when the gas turbine reaches the FSNL until the time when the gas turbine reaches the FSFL is referred to as load up range.

A supply procedure of the coolant is explained.

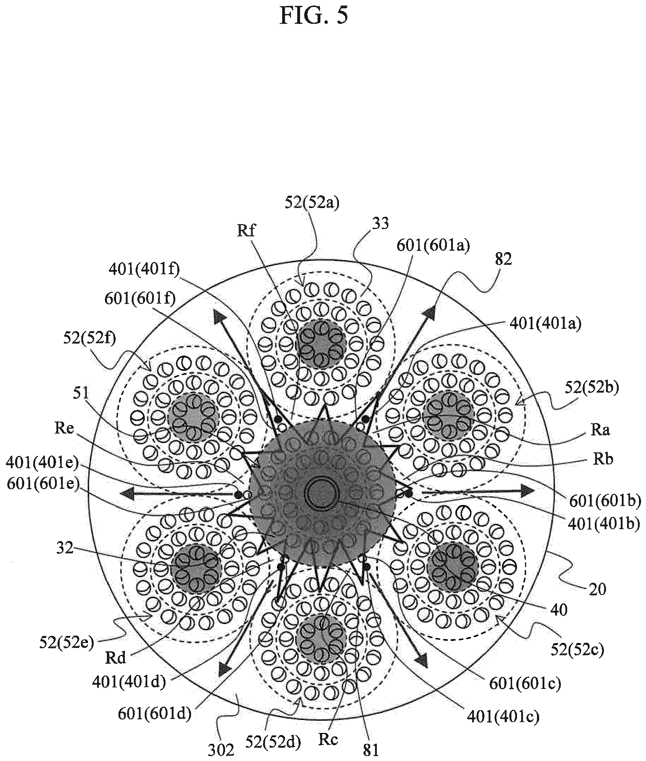

Fig. 5 is a diagram showing a concept of flame formation in a fuel switching process.

In the process from the time when the gas turbine starts the startup until the gas turbine reaches the FSFL, in particular, at the points in time "c" to "d", as shown in Fig. 5, flame by the oil fuel and flame by the gas fuels (the F1 and F2 fuels) interfere with each other, whereby the metal temperature of the air hole plate 20 could excessively rise. In particular, in an outlet of the center air hole group 51, two flames, that is, the flame by the oil fuel and the flame by the gas fuels are formed. Therefore, atomization and evaporation of the oil fuel are promoted by heat of the flame by the gas fuels. Combustion of the oil fuel is promoted. As a result, oil fueled pilot flame 81 is intensified and expands to regions among the plurality of outer circumferential air hole groups 52 as oil fueled pilot intensified flame 82. Therefore, in particular, the metal temperature in the regions Ra to Rf surrounded by the two outer circumferential air hole group 52 adjacent to each other and the center air hole group 51 of the air hole plate 20 could excessively rise.

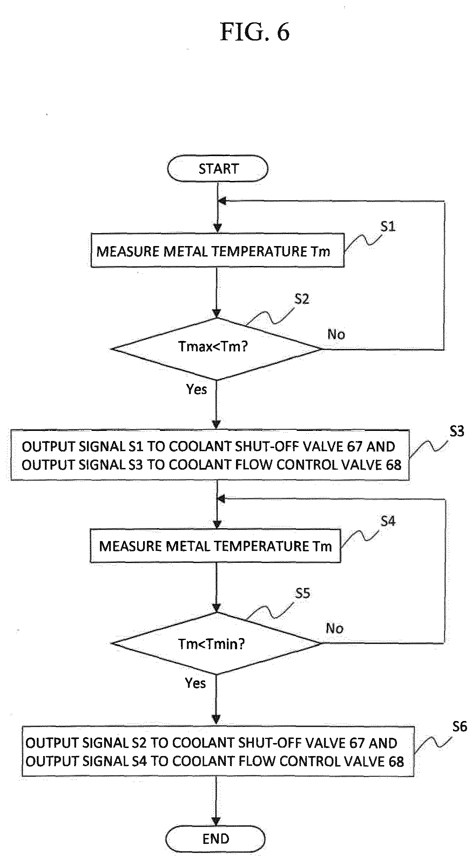

Fig. 6 is a flowchart showing the supply procedure of the coolant.

When the switching of the fuel is started, as shown in Fig. 6, the thermocouple 401 measures the metal temperature Tm (step S1) and outputs the metal temperature Tm to the temperature comparator 501 of the control system 500.

The temperature comparator 501 compares a maximum among the metal temperatures Tm in the regions Ra to Rf of the air hole plate 20 measured by the thermocouple 401 and the upper limit value Tmax (step S2). Specifically, when the metal temperature Tm is larger than the upper limit value Tmax (Tmax<Tm) (Yes), the temperature comparator 501 outputs a metal signal to the calculation part 502. The control system 500 shifts the procedure to step S3. Conversely, when the metal temperature Tm is equal to or smaller than the upper limit value Tmax (Tmax≥Tm) (NO), the control system 500 returns the procedure to step S1.

When receiving an input of the metal signal output by the temperature comparator 501, the calculation part 502 acquires opening of the coolant flow control valve 68 on the basis of the metal temperature Tm and outputs the signal S1 to the coolant shut-off valve 67 and outputs the signal S3 to the coolant flow control valve 68 (step S3).

Subsequently, the thermocouple 401 measures the metal temperature Tm (step S4) and outputs the metal temperature Tm to the temperature comparator 501.

The temperature comparator 501 compares a minimum among the metal temperatures Tm in the regions Ra to Rf of the air hole plate 20 measured by the thermocouple 401 and the lower limit value Tmin (step S5). Specifically, when the metal temperature Tm is smaller than the lower limit value Tmin (Tm<Tmin) (Yes), the temperature comparator 501 outputs a signal to the calculation part 502. Conversely, when the metal temperature Tm is equal to or larger than the lower limit value Tmin (Tmin≤Tm) (No), the control system 500 returns the procedure to step S4.

When receiving an input of the signal from the temperature comparator 501, the calculation part 502 outputs the signal S2 to the coolant shut-off valve 67 and outputs the signal S4 to the coolant flow control valve 68 (step S6). The control system 500 ends the procedure.

### Effect

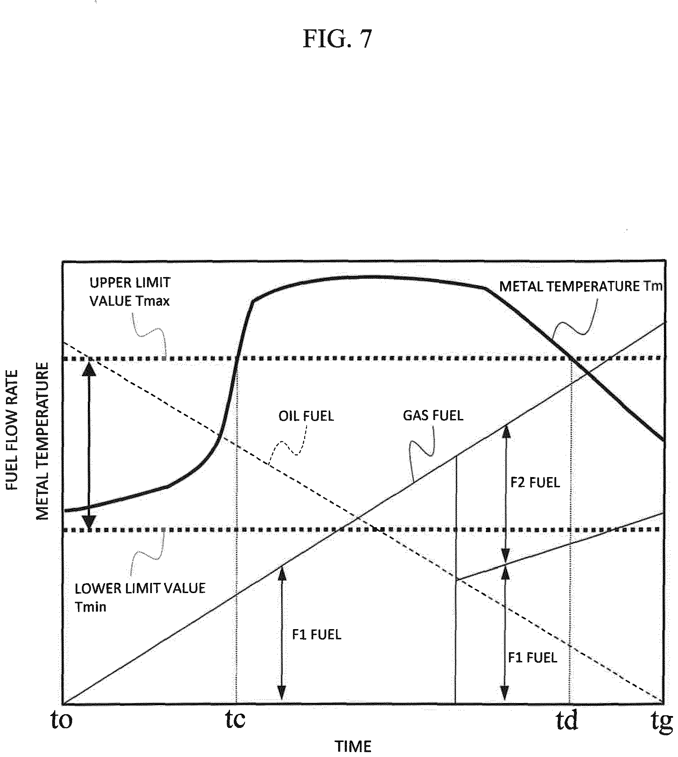

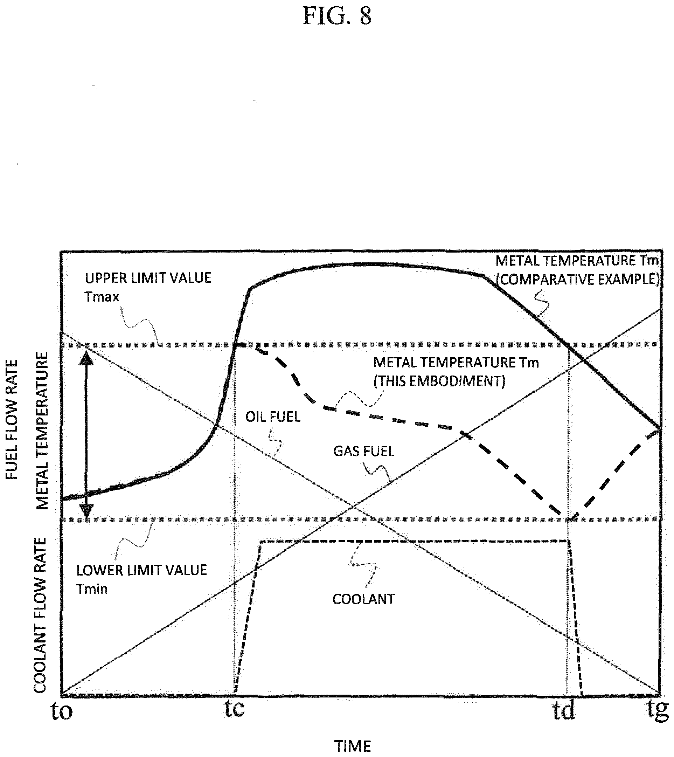

(1) Fig. 7 is a diagram showing changes in a fuel flow rate and a metal temperature in a fuel switching process in a gas turbine plant according to a comparative example. Fig. 8 is a diagram showing changes in a fuel flow rate and a metal temperature in the fuel switching process in the gas turbine plant according to this embodiment. In Figs. 7 and 8, the horizontal axis indicates an elapsed time and the vertical axis indicates a fuel flow rate, a metal temperature, and a coolant flow rate (only in Fig. 8). Time "to" indicates start time of fuel switching (end time of oil fuel combustion). Time "tg" indicates completion time of the fuel switching (start time of gas fuel combustion). Note that the metal temperature Tm in Figs. 7 and 8 indicates a maximum among metal temperatures in the regions Ra to Rf of the air hole plate 20 measured by the thermocouple 401.
   As illustrated in Fig. 7, in the comparative example, after the time "to" elapses, when a flow rate of oil fuel decreases and a flow rate of gas fuel increases, the metal temperature Tm rises because of the reason explained above, at time "tc", the metal temperature Tm crosses the upper limit value Tmax upward to be larger than the upper limit value Tmax. Thereafter, when the oil fueled pilot intensified flame 82 weakens according to the decrease in the flow rate of the oil fuel, the metal temperature Tm drops. At time "td", the metal temperature Tm crosses the upper limit value Tmax from downward to be smaller than the upper limit value Tmax. Thereafter, at time "tg", the switching of the fuel is completed. As explained above, in the comparative example, in the switching process of the fuel, there is time when the metal temperature Tm becomes larger than the upper limit value Tmax (the temperature of the air hole plate 20 excessively rises).
   On the other hand, in this embodiment, the thermocouple 401 and the cooling hole 601 are provided in the regions Ra to Rf surrounded by the two outer circumferential air hole groups 52 adjacent to each other and the center air hole group 51 of the air hole plate 20. The coolant is supplied to the cooling hole 601 on the basis of a measured value of the thermocouple 401. Therefore, as illustrated in Fig. 8, it is possible to cool the air hole plate 20 with the coolant flowing in the cooling hole 601 and reduce the metal temperature Tm. Therefore, it is possible to suppress an excessive temperature rise of the air hole plate 20 and secure the reliability of the combustor 3.
(2) As explained above, the oil fueled pilot intensified flame 82 expands among the plurality of outer circumferential air hole groups 52. Therefore, among the regions surrounded by the two outer circumferential air hole groups 52 adjacent to each other and the center air hole group 51 of the air hole plate 20, temperature easily rises, in particular, in a region located on a straight line extending from the center of the air hole plate 20 and passing between the two outer circumferential air hole groups 52 adjacent to each other. On the other hand, in this embodiment, the cooling hole 601 is formed on the straight line extending from the center of the air hole plate 20 and passing between the two outer circumferential air hole groups 52 adjacent to each other. Therefore, it is possible to effectively cool the region where the temperature easily rises.
(3) In this embodiment, the measured value (the metal temperature Tm) of the thermocouple 401 and the upper limit value Tmax are compared. The coolant is supplied to the cooling hole 601 when the measured value of the thermocouple 401 is larger than the upper limit value Tmax. Therefore, as illustrated in Fig. 8, the metal temperature Tm can be maintained at temperature equal to or smaller than the upper limit value Tmax. It is possible to secure structural strength of the air hole plate 20 and further improve the reliability of the combustor 3.
(4) In this embodiment, the measured value (the metal temperature Tm) of the thermocouple 401 and the lower limit value Tmin are compared. The supply of the coolant to the cooling hole 601 is stopped when the measured value of the thermocouple 401 is smaller than the lower limit value Tmin. Therefore, as illustrated in Fig. 8, the metal temperature Tm can be maintained at temperature equal to or larger than the lower limit value Tmin. It is possible to avoid a situation in which a flame temperature in the combustion chamber 5 drops because of the coolant and flame becomes unstable and further improve the reliability of the combustor 3.

### Second Embodiment

### Configuration

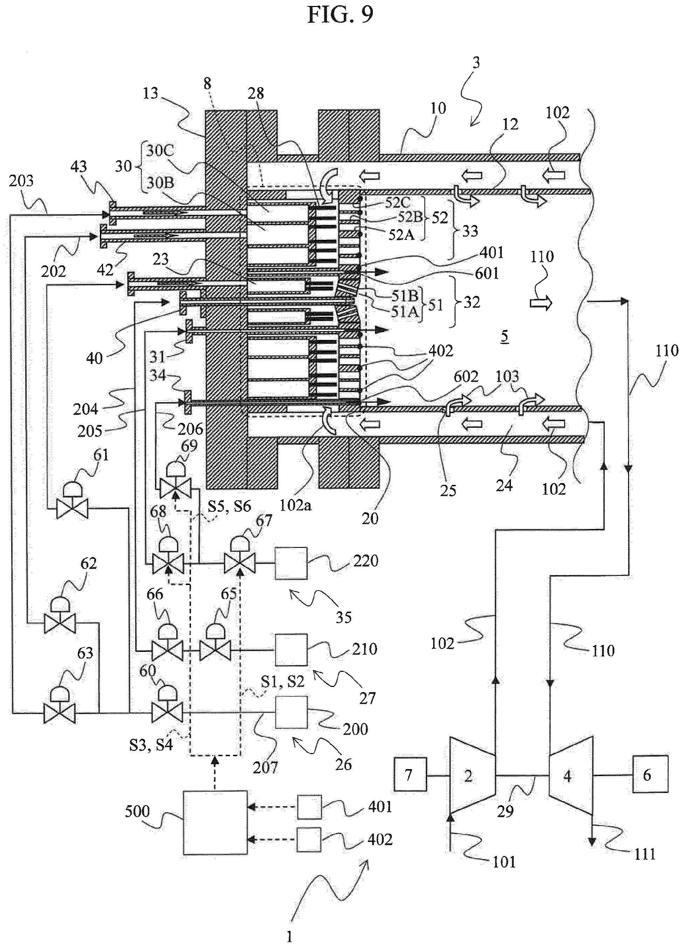

Fig. 9 is a diagram representing a configuration example of a gas turbine plant applied with a combustor according to this embodiment. In Fig. 9, portions equivalent to the portions in the first embodiment are denoted by the same reference numerals and signs and explanation of the portions is omitted as appropriate.

This embodiment is different from the first embodiment in that the cooling system 35 further includes a cooling pipeline 206, a cooling nozzle 34, a thermocouple 402, and a cooling hole 602. Otherwise, this embodiment is the same as the first embodiment.

As shown in Fig. 9, the cooling pipeline 206 branches from the cooling pipeline 205 and connects the coolant supply source 220 and the cooling nozzle 34. The cooling nozzle 34 is connected to the cooling hole 602. Coolant guided from the coolant supply source 220 to the cooling nozzle 34 through the cooling pipeline 206 is injected into the combustion chamber 5 via the cooling hole 602. In the cooling pipeline 206, a coolant flow control valve 69 is provided. In this embodiment, the coolant flow control valve 69 is electrically connected to the control system 500. Valve opening of the coolant flow control valve 69 is adjusted according to signals S5 and S6 from the control system 500. Specifically, when receiving an input of the signal (an opening command signal) S5 from the control system 500, the coolant flow control valve 69 is adjusted to opening corresponding to the single S5. When the coolant flow control valve 69 receives an input of the signal (a closing command signal) S6 from the control system 500, the opening is adjusted to zero (i.e., the coolant flow control valve 69 closes). By adjusting the opening of the coolant flow control valve 69, a flow rate of the coolant supplied from the coolant supply source 220 to the cooling hole 602 is adjusted. At least one cooling hole (another hole part) 602 is provided on the air hole plate 20 to be located between the two outer circumferential air hole groups 52 adjacent to each other. The thermocouple (another temperature sensor) 402 is provided adjacent to the cooling hole 602. The cooling hole 602 and the thermocouple 402 have configurations same as the configurations of the cooling hole 601 and the thermocouple 402.

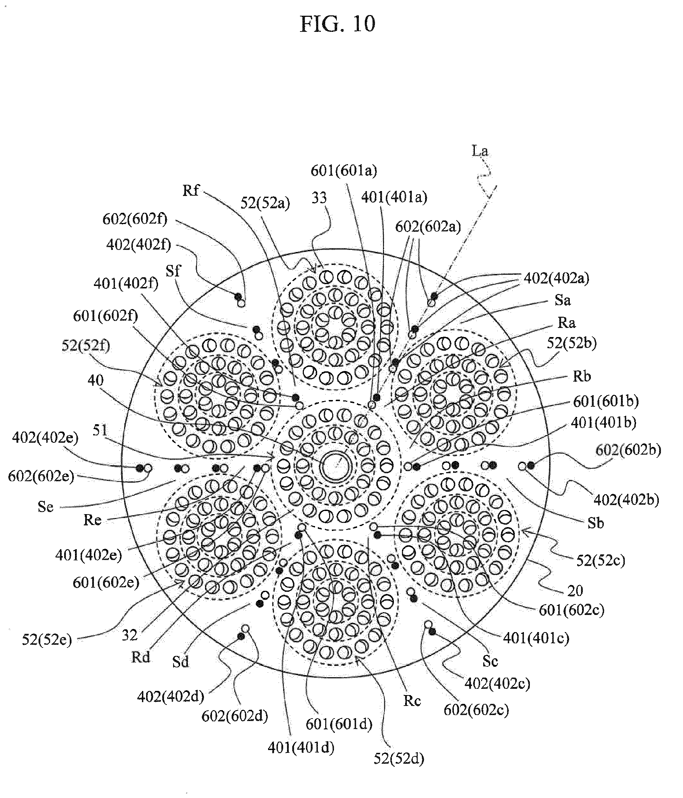

Fig. 10 is a diagram of a burner part according to this embodiment viewed from the downstream side.

In the configuration illustrated in Fig. 10, three thermocouples 402 (402a to 402f) and three cooling holes 602 (602a to 602f) are provided in each of regions Sa to Sf among two outer circumferential air hole groups 52a and 52b, 52b and 52c, 52c and 52d, 52d and 52e, 52e and 52f, and 52f and 52a adjacent to each other of the air hole plate 20. That is, in this embodiment, eighteen thermocouples 402 and eighteen cooling holes 602 are provided on the air hole plate 20. Note that the number of the thermocouples 402 and the cooling holes 602 formed in the regions Sa to Sf of the air hole plate 20 is not limited to three.

The cooling holes 602a are formed to be arranged at intervals on a straight line La. The thermocouples 402a are provided adjacent to the cooling holes 602 at intervals on the straight line La. That is, in this embodiment, the thermocouple 401 a, the cooling hole 601 a, the three thermocouples 402a, and the three cooling holes 602a are arranged on the straight line La. The thermocouples 402b to 402f and the cooling holes 602b to 602f are provided in the same manner as the thermoplastics 402a and the cooling holes 602a.

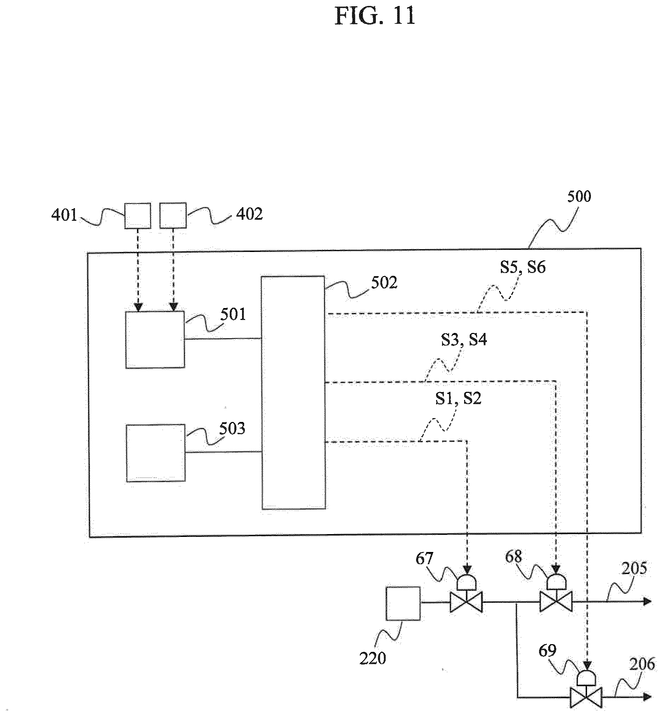

Fig. 11 is a schematic diagram showing a main part of the control system according to this embodiment.

As shown in Fig. 11, in this embodiment, the temperature comparator 501 of the control system 500 is electrically connected to the thermocouples 401 and 402. The temperature comparator 501 compares a maximum among metal temperatures Tn in the regions Sa to Sf of the air hole plate 20 measured by the thermocouple 402 and the upper limit value Tmax. When the metal temperature Tn is larger than the upper limit value Tmax, the temperature comparator 501 outputs a signal (a second metal signal) concerning the metal temperature Tn to the calculation part 502. On the other hand, the temperature comparator 501 compares a minimum among the metal temperatures Tn in the regions Sa to Sf of the air hole plate 20 measured by the thermocouple 402 and the lower limit value Tmin. When the metal temperature Tn is smaller than the lower limit value Tmin, the temperature comparator 501 outputs a signal (a stop signal) to the calculation part 502.

When receiving an input of the second metal signal output from the temperature comparator 501, the calculation part 502 acquires (calculates), on the basis of the metal temperature Tn, opening of the coolant flow control valve 69 from a table indicating a relation between the metal temperature Tn and the opening of the coolant flow control valve 69 stored in the memory part 503. The calculation part 502 outputs the signal S5 to the coolant flow control valve 69 to adjust the opening of the coolant flow control valve 69 to the acquired opening and supplies the coolant to the combustion chamber 5 via the cooling hole 602. On the other hand, when receiving an input of the stop signal from the temperature comparator 501, the calculation part 502 outputs the signal S6 to the coolant flow control valve 69 to adjust the opening of the coolant flow control valve 69 to zero.

### Effect

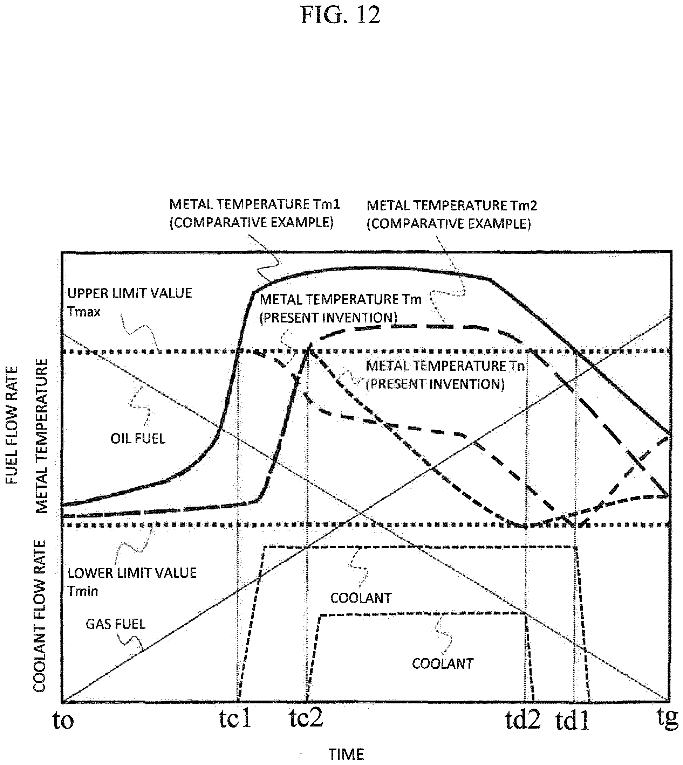

Fig. 12 is a diagram showing changes in a fuel flow rate and a metal temperature in a fuel switching process in the gas turbine plant according to this embodiment.

In this embodiment, at least one cooling hole 602 is provided on the air hole plate 20 to be located in the regions Sa to Sf between the two outer circumferential air hole groups 52 adjacent to each other. Therefore, as illustrated in Fig. 12, it is possible to cool the air hole plate 20 with the coolant flowing in the cooling hole 601 and reduce the metal temperature Tm and, in the regions Sa to Sf of the air hole plate 20, also cool the air hole plate 20 with the coolant flowing in the cooling hole 602 and reduce the metal temperature Tn. Therefore, compared with the first embodiment, it is possible to more quickly cool the air hole plate 20. In addition, in this embodiment, since the number of cooling systems is increased from the number of cooling systems in the first embodiment, it is possible to improve flexibility of the cooling of the air hole plate 20. Therefore, it is possible to cool the air hole plate 20 according to various operating conditions of a gas turbine.

In this embodiment, the measured values (the metal temperatures Tm and Tn) of the thermocouples 401 and 402 and the upper limit value Tmax are compared. The coolant is supplied to the cooling hole 601 when the metal temperature Tm is larger than the upper limit value Tmax (at time "tc1" in Fig. 12). The coolant is supplied to the cooling hole 602 when the metal temperature Tn is larger than the upper limit value Tmax (at time "tc2" in Fig. 12). Therefore, as illustrated in Fig. 12, the metal temperatures Tm and Tn can be maintained at temperature equal to or smaller than the upper limit value Tmax. It is possible to further secure the structural strength of the air hole plate 20 and further improve the reliability of the combustor 3.

In this embodiment, the measured values (the metal temperatures Tm and Tn) of the thermocouples 401 and 402 and the lower limit value Tmin are compared. The supply of the coolant to the cooling hole 601 is stopped when the metal temperature Tm is smaller than the lower limit value Tmin (at time "td1" in Fig. 12). The supply of the coolant to the cooling hole 602 is stopped when the metal temperature Tn is smaller than the lower limit value Tmin (at time "td2" in Fig. 12). Therefore, as illustrated in Fig. 12, the metal temperatures Tm and Tn can be maintained at temperature equal to or larger than the lower limit value Tmin. It is possible to more surely avoid a situation in which a flame temperature in the combustion chamber 5 drops because of the coolant and flame becomes unstable and further improve the reliability of the combustor 3.

### Others

The present invention is not limited to the embodiments explained above. The above embodiments, the figures and the claims disclose features of the invention in specific combinations. Various modifications are included in the present invention. The person skilled in the art will consider further combinations or sub-combinations of these features in order to adapt the invention to his specific needs without leaving the scope of the invention as defined in the independent claims. For example, the embodiments are explained in detail in order to clearly explain the present invention and are not always limited to embodiments including all the explained components. For example, a part of the components of a certain embodiment can be replaced with the components of another embodiment. The components of another embodiment can be added to the components of a certain embodiment.

In the embodiments, the configuration is explained in which the openings of the coolant flow control valves 68 and 69 are adjusted according to the measured values of the thermocouples 401 and 402 and the flow rate of the coolant is controlled. However, an essential effect of the present invention is to suppress an excessive temperature rise of a structure of a gas turbine combustor and secure the reliability of the gas turbine combustor. As long as the essential effect is obtained, the configuration explained above does not always need to be adopted. For example, a configuration may be adopted in which a rather large amount of the coolant is supplied when the measured values of the thermocouples 401 and 402 are near the upper limit value Tmax and a rather small amount of the coolant is supplied when the measured values are near the lower limit value Tmin.

In the embodiments, the configuration is explained in which the memory part 503 of the control system 500 stores the table indicating the relation between the metal temperature Tm and the openings of the coolant flow control valves 68 and 69. However, as long as the essential effect of the present invention is obtained, the configuration does not always need to be adopted. For example, a configuration may be adopted in which the calculation part 502 of the control system 500 stores the table.

In the embodiments explained above, the configuration is explained in which the distal ends of the fuel nozzles 22 and 28 are not inserted into the air hole groups 51 and 52. However, the distal ends of the fuel nozzles 22 and 28 may be inserted into the air hole groups 51 and 52. In this case, since inlet areas of the air hole groups 51 and 52 decrease, the fluid velocity of an air jet increases and the mixture of the fuel injected from the fuel nozzles 22 and 28 and the air is further promoted.

## Claims

1. A gas turbine combustor (3) including:
- a plurality of fuel nozzles (22, 28) that inject fuel,
- an air hole plate (20) including a plurality of air holes (51A, 51 B, 52A, 52B, 52C) formed to correspond to the plurality of fuel nozzles (22, 28), the air hole plate (20) being provided on a downstream side in a flowing direction of the fuel of the plurality of fuel nozzles (27, 28), and
- a combustion chamber (5) that causes the fuel and an air injected from the plurality of air holes (51A, 51 B, 52A, 52B, 52C) to burn to generate combustion gas (110),
**characterized in that**
the air hole plate (20) includes a center air hole group (51) configured from the plurality of air holes and a plurality of outer circumferential air hole groups (52) configured from the plurality of air holes and formed to surround the center air hole group (51),
wherein the gas turbine combustor (3) further comprises:
- a hole part (601) and a temperature sensor (401, 402) provided on the air hole plate (20) to be located in a region surrounded by a pair of the outer circumferential air hole groups (52) adjacent to each other and the center air hole group (51);
- a supply source (220) of coolant;
- a cooling pipeline (205, 206) that connects the hole part (601) and the supply source (220);
- a valve (67) provided in the cooling pipeline (205, 206); and
- a control system (500) configured to drive the valve (67) on the basis of a measured value of the temperature sensor (401, 402).

2. The gas turbine combustor (3) according to claim 1, wherein the hole part (601) is formed on a straight line (La) extending from a center of the air hole plate (20) and passing between the two outer circumferential air hole groups (52) adjacent to each other.

3. The gas turbine combustor (3) according to claim 1, wherein the control system (500) includes:
- a temperature comparator (501) configured to compare the measured value of the temperature sensor (401, 402) and a setting value; and
- a calculation part (502) configured to output a signal to the valve (67) when the measured value of the temperature sensor (401, 402) is larger than the setting value.

4. The gas turbine combustor (3) according to claim 1, wherein at least one other hole part (602) is further provided on the air hole plate (20) to be located between the two outer circumferential air hole groups (52) adjacent to each other.

5. A gas turbine plant (1) comprising:
- a compressor (2) that compresses air;
- the gas turbine combustor (3) according to one of claims 1 to 4 being configured to mix the compressed air supplied from the compressor (1) with fuel and to burn the compressed air and the fuel; and
- a turbine (4) driven by combustion gas supplied from the gas turbine combustor (3).
